# FASCICULE DE BREVET EUROPEEN

(11) **EP 3 710 298 B1**
(45) Date de publication et mention de la délivrance du brevet: **02.09.2026**
(21) Numéro de dépôt: 18822423.2
(22) Date de dépôt: 16.11.2018
(51) Int. Cl.: B60K 6/387, B60K 17/02, B60K 6/48

(54) **DISPOSITIF DE TRANSMISSION POUR VEHICULE HYBRIDE**
GETRIEBEVORRICHTUNG FÜR HYBRIDFAHRZEUG
TRANSMISSION DEVICE FOR A HYBRID VEHICLE

(30) Priorité: 17.11.2017 FR 1760866
(43) Date de publication de la demande: 23.09.2020
(73) Titulaire: Valeo Embrayages, 80009 Amiens (FR)
(72) Inventeur: DOLE, Arnaud, 80009 Amiens (FR); GUINOT, Thierry, 80009 Amiens (FR); BOULET, Jérôme, 80009 Amiens (FR)
(74) Mandataire: Valeo Powertrain Systems
(86) Numéro de dépôt international: PCT/FR2018/052866
(87) Numéro de publication internationale: WO 2019/097176

(56) Documents cités:
- EP-A1- 2 287 487
- DE-A1- 102007 003 107
- DE-A1- 102011 117 781
- DE-A1- 102017 104 446
- FR-A1- 2 871 111
- US-A1- 2011 240 384

## Description

La présente invention se rapporte au domaine des transmissions pour véhicule automobile. Elle se rapporte notamment à un dispositif de transmission destiné à être disposé, dans la chaîne de transmission, entre un moteur thermique et une boîte de vitesses.

Elle concerne notamment un dispositif de transmission pour un véhicule automobile de type hybride dans lequel une machine électrique est également disposée entre le moteur et la boîte de vitesses.

Dans l'état de la technique, il est connu des ensembles de transmission, disposés entre la boîte de vitesses et le moteur thermique et comportant une machine électrique et un embrayage côté moteur permettant d'accoupler en rotation le vilebrequin du moteur thermique au rotor de la machine électrique. Ainsi, il est possible de couper le moteur thermique à chaque arrêt du véhicule et de le redémarrer grâce à la machine électrique. La machine électrique peut également constituer un frein électrique ou apporter un surplus d'énergie au moteur thermique pour l'assister ou éviter que celui-ci ne cale. La machine électrique peut également assurer l'entraînement du véhicule. Lorsque le moteur tourne, la machine électrique joue le rôle d'un alternateur. Un tel ensemble de transmission est notamment divulgué dans le document FR 3 015 380.

Une telle machine électrique peut être en ligne avec l'axe de rotation de l'ensemble de transmission, comme décrit dans le document FR 3 015 380, ou déportée dans un emplacement moins encombré de l'environnement de la chaîne de transmission. La machine électrique peut alors être reliée au reste de la chaîne de transmission, par exemple par un engrenage, par exemple par une poulie.

Dans les développements actuels d'hybridation (« hybridisation » en anglais) des véhicules automobiles, il est demandé de disposer de chaîne de transmission intégrant une source d'énergie électrique sans toutefois que cela n'impacte la compacité, notamment axiale, de ladite chaîne de transmission. Cette recherche de compacité est à la base de l'invention.

Dans cette logique, le dispositif de transmission de couple entre le moteur thermique et la machine électrique décrit dans le document FR 3 015 380 n'est pas pleinement satisfaisant. En effet, il comprend, sur une même hauteur radiale, décalés axialement, les ressorts d'un amortisseur d'oscillations de torsion et les garnitures d'un embrayage à friction. L'actionneur d'embrayage lui aussi décalé axialement des garnitures de friction complète le dispositif. Cette succession axiale d'éléments de la chaîne de transmission ne répond pas aux attentes de compacité du marché actuel Le document DE 102017104446A1 divulgue un ensemble de transmission comprenant un élément d'entrée de couple, un élément de roulement support de l'élément d'entrée de couple, un organe d'actionnement associé à un embrayage d'entrée qui accouple sélectivement et par friction l'élément d'entrée de couple et l'élément intermédiaire, un premier embrayage de sortie accouplant sélectivement et par friction l'élément intermédiaire et le premier élément de sortie.

L'invention vise à permettre de bénéficier d'un dispositif de transmission de couple permettant de concilier les exigences de compacité axiale.

L'invention y parvient, selon l'un de ses aspects, à l'aide d'un dispositif de transmission de couple, notamment pour véhicule automobile, comprenant :
- un élément d'entrée de couple, en rotation autour d'un axe, apte à être couplé en rotation à un vilebrequin d'un moteur à combustion interne,
- un premier élément de sortie de couple, apte à être couplé en rotation à un premier arbre d'entrée d'une boîte de vitesses,
- un élément intermédiaire agencé entre l'élément d'entrée de couple et l'élément de sortie de couple, au sens de la transmission de couple,
- un embrayage d'entrée accouplant sélectivement et par friction l'élément d'entrée et l'élément intermédiaire,
- un premier embrayage de sortie accouplant sélectivement et par friction l'élément intermédiaire et le premier élément de sortie,
- un organe d'actionnement associé à l'embrayage d'entrée et un organe d'actionnement associé au premier embrayage de sortie, et
- un organe de roulement support de l'élément d'entrée.

Le dispositif est caractérisé en ce que le premier embrayage de sortie, l'embrayage d'entrée, l'organe d'actionnement de l'embrayage d'entrée et l'organe de roulement support de l'élément d'entrée se succèdent radialement et sont successivement les uns sous les autres, en ce qu'il existe un plan perpendiculaire à l'axe (X) de rotation qui coupe à la fois le premier embrayage de sortie et l'embrayage d'entrée, et en ce que le dispositif comprend en outre un deuxième élément de sortie de couple, apte à être couplé en rotation à un deuxième arbre d'entrée d'une boîte de vitesses, un deuxième embrayage de sortie, accouplant sélectivement et par friction l'élément intermédiaire et le deuxième élément de sortie et un organe d'actionnement associé au deuxième embrayage de sortie.

Cet enchaînement permet d'empiler les éléments radialement de sorte que l'on dispose d'un dispositif compact axialement. Cet enchaînement permet donc de limiter l'impact du dispositif sur l'encombrement axial de la chaîne de transmission.

Au sens de l'invention, la succession radiale se comprend en terme de distance radiale. Les différents éléments précités ne se recoupent pas radialement, c'est-à-dire qu'ils sont successivement les uns sous les autres.

Selon un aspect de l'invention, le premier embrayage de sortie, l'embrayage d'entrée, l'organe d'actionnement de l'embrayage d'entrée et l'organe de roulement support de l'élément d'entrée peuvent être empilés radialement en rapprochement de l'axe de rotation.

**Selon un autre aspect de l'invention, il existe un plan perpendiculaire à l'axe de rotation qui coupe à la fois l'organe d'actionnement de l'embrayage d'entrée, l'organe de roulement support de l'élément d'entrée, et éventuellement l'embrayage d'entrée et/ou le premier embrayage de sortie.**

Selon un autre aspect de l'invention, l'embrayage d'entrée et/ou le premier embrayage de sortie peuvent comprendre:
- un porte-disque d'entrée solidaire en rotation de l'élément d'entrée pour l'embrayage d'entrée, et solidaire en rotation de l'élément intermédiaire pour le premier embrayage de sortie,
- un porte-disque de sortie solidaire en rotation de l'élément intermédiaire pour l'embrayage d'entrée, et solidaire en rotation du premier élément de sortie pour le premier embrayage de sortie, et
- un ensemble multidisque comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, l'embrayage décrivant une position débrayée et une position embrayée dans laquelle lesdits plateaux et le disque de friction pincent les garnitures de friction de manière à transmettre un couple entre le porte-disque d'entrée et le porte-disque de sortie.

**Les garnitures peuvent être fixées sur les disques de friction, notamment par collage, notamment par rivetage, notamment par surmoulage. En variante, les garnitures sont fixées sur les plateaux.**

**Chaque porte-disque peut synchroniser en rotation l'ensemble des plateaux ou l'ensemble des disques de friction. Les portes-disques peuvent comporter une jupe cylindrique sur lesquelles sont montées les plateaux et les disques de friction.**

**Les plateaux et les disques peuvent coopérer avec les portes-disques selon une de leur périphérie radiale par complémentarité de forme. Les jupes cylindriques, les plateaux et les disques de friction peuvent par exemple être cannelés.**

**Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.**

**Selon un aspect de l'invention, les plateaux peuvent être radialement à l'intérieur de la jupe cylindrique du porte-disque d'entrée ou de sortie avec lequel ils sont solidaires en rotation. Les disques peuvent être radialement à l'extérieur de la jupe cylindrique du porte-disque d'entrée ou de sortie avec lequel ils sont solidaires en rotation. En variante, les plateaux peuvent être radialement à l'extérieur de la jupe cylindrique du porte-disque d'entrée ou de sortie avec lequel ils sont solidaires en rotation. Les disques peuvent être radialement à l'intérieur de la jupe cylindrique du porte-disque d'entrée ou de sortie avec lequel ils sont solidaires en rotation.**

**L'embrayage peut être de type humide. De préférence, l'embrayage comporte entre deux et sept disques de friction, de préférence quatre disques de friction.**

**De tels embrayages multidisque permettent de limiter la hauteur radiale à laquelle il doit être disposé et de limiter son étendu axiale. Cela permet de loger l'embrayage dans un espace intérieur à l'organe de rappel élastique.**

Selon un autre aspect de l'invention, l'élément intermédiaire peut comprendre une zone de connexion électrique apte à être lié en rotation avec une machine électrique tournante autour d'un axe parallèle à l'axe de rotation. La zone de connexion électrique peut être décalée axialement de l'embrayage d'entrée et/ou du premier embrayage de sortie. La machine électrique est alors dite « off-line ».

**La zone de connexion électrique peut être soudée, rivetée ou venir d'un seul tenant avec le reste de l'élément intermédiaire.**

**La zone de connexion électrique peut être apte à coopérer avec un moyen de liaison peut par exemple être du type courroie ou chaîne ou engrenages. De manière préférentielle, le moyen de liaison est une courroie.**

Cette disposition permet de positionner la machine électrique en fonction de l'espace disponible dans la chaîne de traction du véhicule. Cette disposition permet notamment de ne pas avoir à disposer la machine élec-trique axialement à la suite des embrayages, ce qui serait négatif pour la 30 compacité axiale. Cette disposition permet notamment de ne pas avoir à disposer la machine électrique radialement au delà des embrayages, ce qui serait négatif pour la compacité radiale.

Néanmoins, selon un autre aspect de l'invention, on peut imaginer que l'élément intermédiaire définit un support de rotor d'une machine électrique en rotation autour de l'axe de rotation. La machine électrique est alors « on-line ».

**Selon un aspect de l'invention, l'embrayage d'entrée et/ou le premier embrayage de sortie peuvent comprendre:**
- **un porte-disque d'entrée solidaire en rotation solidaire en rotation de l'élément intermédiaire,**
- **un porte-disque de sortie solidaire en rotation du premier élément de sortie, et**
- **un ensemble multidisque tel que décrit en lien avec l'embrayage d'entrée et le premier embrayage de sortie.**

**Ce qui a été présenté en relation avec les embrayages de sortie et les embrayages d'entrée peut s'appliquer au deuxième embrayage de sortie.**

Selon un premier mode de réalisation de l'invention, les premier et deuxième embrayages de sortie peuvent être empilés radialement.

Selon ce premier mode de réalisation, les organes d'actionnement associés aux premier et deuxième embrayages de sortie peuvent être empilés radialement.

Selon un autre aspect de l'invention, le dispositif peut comprendre un organe de transmission de force pour chacun de l'embrayage d'entrée, du premier embrayage de sortie et du deuxième embrayage de sortie. Chaque organe de transmission de force est mobile axialement pour transmettre l'effort d'actionnement de l'organe d'actionnement vers l'embrayage associé.

Selon un aspect de l'invention, dans le premier mode de réalisation de l'invention, chaque organe de transmission de force des embrayages de sortie peut être traversé par l'élément intermédiaire pour ménager la zone de connexion. L'élément intermédiaire peut comprendre au moins un doigt traversant une ouverture de chaque organe de transmission de force, de présence une pluralité de doigts. Les doigts peuvent se rejoindre pour former la zone de connexion électrique. Ainsi, les organes de transmission de force des premier et deuxième embrayages de sortie sont entrainés en rotation pour l'élément intermédiaire et/ou maintenus radialement par l'élément intermédiaire.

**Selon un aspect de l'invention, la zone de connexion électrique peut être radialement au droit des organes d'actionnement associés aux premier et deuxième embrayages de sortie.**

Selon un deuxième mode de réalisation, le deuxième embrayage de sortie peut être décalé axialement du premier embrayage de sortie.

Selon ce deuxième mode de réalisation, les organes d'actionnement du premier embrayage de sortie et de l'embrayage d'entrée peuvent être empilés radialement.

**Selon ce deuxième mode de réalisation, le deuxième embrayage de sortie peut être radialement plus proche de l'axe que le premier embrayage de sortie.**

Selon un autre aspect, et en particulier dans le deuxième mode de réalisation, la zone de connexion électrique et le deuxième embrayage de sortie peuvent être empilés radialement en rapprochement de l'axe de rotation.

Selon un autre aspect de l'invention, un organe de roulement support de l'élément intermédiaire peut être disposé axialement entre l'organe d'actionnement du deuxième embrayage de sortie d'une part et les éléments de sortie d'autre part.

**L'organe de roulement support de l'élément intermédiaire peut être un roulement à billes.**

**Selon un autre aspect de l'invention, un organe de maintien en position débrayée peut être prévu pour repousser l'organe de transmission de force de chaque embrayage.**

**Chaque embrayage peut être de type « normalement ouvert ».**

**L'organe de transmission de force peut exercer un effort axial sur l'ensemble multidisque pour déplacer les plateaux vers les disques, notamment sur un plateau d'extrémité de l'ensemble multidisque. L'actionnement est ainsi de type « poussé ».**

**Chaque organe de transmission de force peut présenter une extrémité radiale extérieure recourbée définissant une surface d'appui pour exercer l'effort axial sur l'ensemble multidisque. Chaque organe de transmission de force peut présenter une extrémité radiale intérieure avec lequel il coopère avec l'organe d'actionnement associé.**

**Cette surface d'appui peut venir en appui sur le plateau d'extrémité de l'ensemble multidisque. La surface d'appui peut être continue. L'extrémité radiale extérieure peut être une couronne continue de sorte que la surface d'appui est continue. L'extrémité radiale extérieure peut comporter une pluralité de doigts d'extension axiale et reparties autour de l'axe de sorte que la surface d'appui est discontinue. Ces doigts permettent aux organes de transmission de force de pouvoir actionner l'ensemble multidisque au travers de l'élément intermédiaire.**

**En particulier, les organes de transmission de force associés aux premier et au deuxième embrayages de sortie peuvent comporter des doigts à leur extrémité axiale pour passer au travers l'élément intermédiaire. Cela permet de disposer l'embrayage et son actionneur de part et d'autre de l'élément intermédiaire.**

Chaque organe de transmission de force, en particulier l'organe de transmission de force de l'embrayage d'entrée, peut présenter trois coudes entre lesquelles sont interposées des portions planes. Cela permet d'avoir un actionnement compact axialement.

Selon un aspect de l'invention, chaque organe d'actionnement peut comprendre un piston annulaire monté coulissant axialement à l'extérieur d'un tube interne, le piston et le tube formant une chambre d'actionnement. L'organe d'actionnement peut également comporter une butée tournante portée par le piston et coopérant avec l'organe de transmission de force. Cet organe d'actionnement est aussi appelé actionneur de type « CSC» (« Concentric Slave Cylinder » en anglais). La chambre d'actionnement peut être étanche et remplie d'huile. Le piston et le tube sont fixes en rotation de sorte que la chambre d'actionnement et l'huile ne tourne pas.

Selon un aspect de l'invention, la butée tournante peut être un palier, notamment un palier à roulement. Le palier à roulement peut comporter une bague intérieure fixée au piston, une bague extérieure en appui contre l'organe de transmission de force et des corps roulants interposés entre la bague intérieure et la bague extérieure. De préférence, les corps roulants peuvent être des billes.

Chaque piston peut être de révolution autour de l'axe de rotation.

Les formes du piston et/ou de l'organe d'actionnement étant ainsi choisies de sorte que l'embrayage et son actionneur puissent s'empiler radialement, ce qui contribue à la compacité axiale du dispositif.

Dans ce mode de réalisation, les pressions fluidiques associées aux positions « embrayée » et « débrayée » sont les pressions de la chambre d'actionnement.

Selon un autre aspect de l'invention, le tube de l'organe d'actionnement de l'embrayage d'entrée, et éventuellement le tube de l'organe d'actionnement du premier embrayage de sortie, peuvent être ménagé dans une cloison transversale. La cloison transversale peut définir un réseau d'alimentation en fluide du ou des organes d'actionnement.

Selon un autre aspect de l'invention, les embrayages peuvent être disposés dans une chambre étanche remplie d'huile. La cloison transversale peut définir en partie cette chambre étanche.

Selon un aspect de l'invention, l'organe de roulement support de l'élément d'entrée peut être disposé radialement entre la cloison radiale, notamment son extrémité intérieure, et l'élément d'entrée.

Selon un aspect de l'invention, l'organe de roulement support de l'élément intermédiaire peut être disposé entre l'élément intermédiaire, notamment une extrémité radiale de l'élément intermédiaire, et une portion fixe du dispositif. Cette portion fixe peut ménager le tube de l'organe d'actionnement du deuxième embrayage de sortie et éventuellement le tube de l'organe d'actionnement du premier embrayage de sortie.

Selon un aspect de l'invention, le premier et deuxième élément de sortie peut comprendre un voile dont la périphérie interne est cannelée et apte à coopérer, respectivement avec un premier et un deuxième arbre de boîte de vitesses.

L'invention sera mieux comprise, et d'autres buts, détails, caractéristiques et avantages de celle-ci apparaîtront plus clairement au cours de la description suivante de plusieurs modes de réalisation particuliers de l'invention, en référence aux figures annexées.
- la figure 1 est une vue en coupe axiale d'un exemple du dispositif selon l'invention dans un premier mode de réalisation, et
- la figure 2 est une vue en coupe axiale selon un deuxième exemple du dispositif dans un deuxième mode de réalisation.

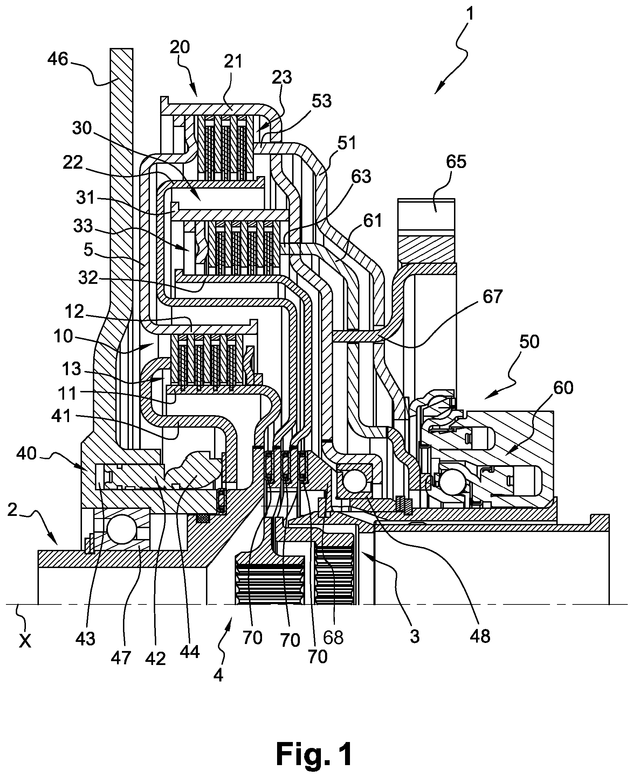

En relation avec la figure 1, on observe un dispositif de transmission de couple 1 comprenant :
- un élément d'entrée de couple 2, en rotation autour d'un axe de rotation X, apte à être couplé en rotation à un vilebrequin d'un moteur thermique (non représenté),
- un premier élément de sortie de couple 4, apte à être couplé en rotation à un premier arbre d'entrée d'une boîte de vitesses (non représenté),
- un deuxième élément de sortie de couple 3, apte à être couplé en rotation à un deuxième arbre d'entrée d'une boîte de vitesses (non représenté) et
- un élément intermédiaire 5 agencé entre l'élément d'entrée de couple 2 et les premier 4 et deuxième 3 élément de sortie de couple, au sens de la transmission de couple.

Dans l'exemple considéré, les premier 4 et deuxième 3 éléments de sortie comprennent un voile dont la périphérie interne est cannelée et apte à coopérer, respectivement avec un premier et un deuxième arbre de boîte de vitesses. Dans l'exemple considéré, le premier et deuxième arbre de boîte sont coaxiaux.

Dans l'exemple considéré, le dispositif 1 comprend également un embrayage d'entrée 10 accouplant sélectivement et par friction l'élément d'entrée 2 et l'élément intermédiaire 5.

L'embrayage d'entrée 10 comprend :
- un porte-disque d'entrée 11 solidaire en rotation de l'élément d'entrée 2,
- un porte-disque de sortie 12 solidaire en rotation de l'élément intermédiaire 5 et,
- un ensemble multidisque 13 comprenant plusieurs disques de friction, ici quatre, solidaires en rotation du porte-disque d'entrée 11, plusieurs plateaux respectivement disposés de part et d'autre de chaque disque de friction, solidaires en rotation du porte-disque sortie 12 et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée 11 et le porte-disque de sortie 12.

Chaque porte-disque 11, 12 synchronise en rotation l'ensemble des plateaux et l'ensemble des disques de friction. Chaque porte-disque 11, 12 comporte une jupe cylindrique sur lesquelles sont montées les plateaux et les disques de friction.

Les disques de friction de l'ensemble multidisque 13 coopèrent avec la jupe cylindrique du porte-disque d'entrée 11 selon leur périphérie radialement intérieure par cannelures. Les disques de friction sont donc radialement à l'extérieur de la jupe cylindrique.

Les plateaux de l'ensemble multidisque 13 coopèrent avec la jupe cylindrique du porte-disque de sortie 12 selon leur périphérie radialement extérieur par cannelures. Les plateaux sont donc radialement à l'intérieur de la jupe cylindrique.

Dans l'exemple considéré, le dispositif comprend également un premier embrayage de sortie 20 accouplant sélectivement et par friction l'élément intermédiaire 5 et le premier élément de sortie 4.

Le premier embrayage de sortie 20 comprend :
- un porte-disque d'entrée 21 solidaire en rotation de l'élément intermédiaire 5,
- un porte-disque de sortie 22 solidaire en rotation du premier élément de sortie 4 et,
- un ensemble multidisque 23 comprenant plusieurs disques de friction, ici trois, solidaires en rotation du porte-disque de sortie 22, plusieurs plateaux respectivement disposés de part et d'autre de chaque disque de friction, solidaires en rotation du porte-disque d'entrée 21 et des garnitures de friction disposées entre les plateaux et un disque de friction, fixées de chaque côté des disques de friction, l'embrayage 20 décrivant une position débrayée et une position embrayée dans laquelle lesdits plateaux et le disque de friction pincent les garnitures de friction de manière à transmettre un couple entre le porte-disque d'entrée 21 et le porte-disque de sortie 22.

Chaque portes-disque 21, 22 comporte une jupe cylindrique sur lesquelles sont montées les plateaux et les disques de friction.

Les disques de friction de l'ensemble multidisque 23 coopèrent avec la jupe cylindrique du porte-disque de sortie 22 selon leur périphérie radialement extérieure par cannelures. Les disques de friction sont donc radialement à l'intérieur de la jupe cylindrique.

Les plateaux de l'ensemble multidisque 23 coopèrent avec la jupe cylindrique du porte-disque d'entrée 21 selon leur périphérie radialement extérieur par cannelures. Les plateaux sont donc radialement à l'intérieur de la jupe cylindrique.

Dans l'exemple considéré, le dispositif 1 comprend un deuxième embrayage de sortie 30, accouplant sélectivement et par friction l'élément intermédiaire 5 et le deuxième élément de sortie 3.

Le deuxième embrayage de sortie 30 comprend :
- un porte-disque d'entrée 31 solidaire en rotation de l'élément intermédiaire 5,
- un porte-disque de sortie 32 solidaire en rotation du deuxième élément de sortie 3 et,
- un ensemble multidisque 33 comprenant plusieurs disques de friction, ici quatre, solidaires en rotation du porte-disque de sortie 32, plusieurs plateaux respectivement disposés de part et d'autre de chaque disque de friction, solidaires en rotation du porte-disque d'entrée 31 et des garnitures de friction disposées entre les plateaux et un disque de friction, fixées sur de chaque côté des disques de friction, l'embrayage 30 décrivant une position débrayée et une position embrayée dans laquelle lesdits plateaux et le disque de friction pincent les garnitures de friction de manière à transmettre un couple entre le porte-disque d'entrée 31 et le porte-disque de sortie 32.

Chaque porte-disque 31, 32 comporte une jupe cylindrique sur lesquelles sont montées les plateaux et les disques de friction.

Les disques de friction de l'ensemble multidisque 33 coopèrent avec la jupe cylindrique du porte-disque de sortie 32 selon leur périphérie radialement extérieure par cannelures. Les disques de friction sont donc radialement à l'intérieur de la jupe cylindrique.

Les plateaux de l'ensemble multidisque 33 coopèrent avec la jupe cylindrique du porte-disque d'entrée 31 selon leur périphérie radialement extérieure par cannelures. Les plateaux sont donc radialement à l'intérieur de la jupe cylindrique.

Dans l'exemple considéré, le premier mode de réalisation de l'invention, le deuxième embrayage de sortie 30, le premier embrayage de sortie 20 et l'embrayage d'entrée 10 sont empilés radialement.

Dans l'exemple considéré, le dispositif 1 comprend un organe d'actionnement 40 et un organe de transmission de force 41 associé à l'embrayage d'entrée 10.

L'organe de transmission de force 41 est mobile axialement pour transmettre l'effort d'actionnement de l'organe d'actionnement 40 vers l'embrayage d'entrée 10. L'organe de transmission de force 41 exerce un effort axial sur l'ensemble multidisque 13 pour déplacer les plateaux vers les disques. L'actionnement est ainsi de type « poussé ».

L'organe de transmission de force 41 présente une extrémité radiale extérieure recourbée définissant une surface d'appui pour exercer l'effort axial sur l'ensemble multidisque 13, continue ou discontinue dans l'exemple considéré.

L'organe d'actionnement 40 comprend un piston 42 annulaire monté coulissant axialement à l'extérieur d'un tube interne, le piston 42 et le tube formant une chambre d'actionnement 43. L'organe d'actionnement 40 comporte une butée tournante, qui est ici un palier à roulement 44, portée par le piston 42 et coopérant avec une extrémité radiale intérieure de l'organe de transmission de force 41.

Le palier à roulement 44 comporte une bague extérieure fixée au piston, une bague intérieure en appui contre l'organe de transmission de force 41 et des corps roulants interposés entre la bague intérieure et la bague extérieure.

Dans l'exemple considéré, le tube de l'organe d'actionnement 40 de l'embrayage d'entrée 10 est ménagé dans une cloison transversale 46 qui définit un réseau d'alimentation en fluide du l'organe d'actionnement 40.

Dans l'exemple considéré, les embrayages 10, 20, 30 sont disposés dans une chambre étanche remplie d'huile, la cloison transversale 46 définit en partie cette chambre étanche.

Dans l'exemple considéré, le dispositif 1 comprend un organe de roulement 47 support de l'élément d'entrée 2, ici un roulement à billes. L'organe de roulement 47 support de l'élément d'entrée 2 est disposé entre l'extrémité radiale de la cloison transversale 46 et une portion axiale de l'élément d'entrée 2.

Ainsi, le premier embrayage de sortie 20, le deuxième embrayage de sortie 30, l'embrayage d'entrée 10, l'organe d'actionnement 40 de l'embrayage d'entrée 10 et l'organe de roulement 47 support de l'élément d'entrée 2 se succèdent radialement. De façon plus précise, dans cet exemple considéré, les éléments précités sont empilés radialement en rapprochement de l'axe X.

Dans l'exemple considéré, le dispositif 1 comprend également un organe d'actionnement 50 et un organe de transmission de force 51 associé au premier embrayage de sortie 20. L'organe de transmission de force 51 est mobile axialement pour transmettre l'effort d'actionnement de l'organe d'actionnement 50 vers le premier embrayage de sortie 20.

Le dispositif 1 comprend également un organe d'actionnement 60 et un organe de transmission de force 61 associé au deuxième embrayage de sortie 30. L'organe de transmission de force 61 est mobile axialement pour transmettre l'effort d'actionnement de l'organe d'actionnement 60 vers le deuxième embrayage de sortie 30.

Ces organes d'actionnement 50, 60 reprennent les mêmes éléments que ceux détaillés en lien avec l'organe d'actionnement 40 de l'embrayage d'entrée 10. Les organes d'actionnement 50, 60 des embrayages de sortie 20, 30, en particulier leur chambre d'actionnement sont empilés radialement. Les organes d'actionnement 50, 60 des embrayages de sortie 20, 30 sont du côté, axialement parlant, du premier et du deuxième élément de sortie 4, 3. L'organe d'actionnement 40 de l'embrayage d'entrée 10 est de l'autre côté du premier et du deuxième élément de sortie 4, 3.

Les organes de transmission de force 51, 61 des embrayages de sortie 20, 30 présentent chacun une extrémité radiale extérieure recourbée définissant une surface d'appui pour exercer l'effort axial sur les ensemble multidisques 23, 33.

Dans l'exemple considéré, l'extrémité radiale extérieure de ces deux organes de transmission de force 51, 61 comporte une pluralité de doigts d'extension axiale, respectivement numérotés 53, 63, et reparties autour de l'axe X de sorte que leur surface d'appui est discontinue. Ces doigts 53, 63 passent ici au travers d'ouvertures ménagées dans l'élément intermédiaire 5.

Ces doigts 53, 63 permettent aux organes de transmission de force 51, 61 de pouvoir actionner les ensembles multidisque 23, 33 au travers de l'élément intermédiaire 5.

Dans l'exemple considéré, l'élément intermédiaire 5 comprend également une zone de connexion électrique 65 apte à être lié en rotation avec une machine électrique tournante (non représentée) autour d'un axe parallèle à l'axe X. La zone de connexion électrique 65 est ici décalée axialement des embrayages 10, 20, 30. La machine électrique est alors dite « off-line ». La zone de connexion électrique 65 est apte à coopérer avec un moyen de liaison qui peut par exemple être du type courroie ou chaîne ou engrenages. De manière préférentielle, le moyen de liaison est une courroie.

Dans l'exemple considéré, les organes de transmission de force 51, 61 des embrayages de sortie 20, 30 sont traversés par l'élément intermédiaire 5 pour ménager la zone de connexion 65. L'élément intermédiaire 5 comprend une pluralité de doigts 67 traversant des ouvertures de chaque organe de transmission de force 51, 61. Les doigts 67 se rejoignent ici pour former la zone de connexion électrique 65.

Dans l'exemple considéré, la zone de connexion électrique 65 est située radialement au droit des organes d'actionnement 50, 60 associés aux premier 20 et deuxième 30 embrayages de sortie.

Dans l'exemple considéré, un organe de roulement support 48 de l'élément intermédiaire 5, ici un roulement à billes, est disposé axialement entre les organes d'actionnement 50, 60 des embrayages de sortie 20, 30 d'une part et les éléments de sortie 4, 3 d'autre part.

L'organe de roulement support 48 de l'élément intermédiaire 5 est disposé entre une extrémité radiale de l'élément intermédiaire 5 et une portion fixe 68 d'extension axiale du dispositif 1. Cette portion fixe 68 peut être solidaire de la cloison transversale 46. Cette portion fixe 68 peut ménager le tube de l'organe d'actionnement 60 du deuxième embrayage de sortie 30.

Des organes de roulement 70, de préférence des roulements à aiguilles, sont prévues entre l'élément d'entrée 2, le deuxième élément de sortie 3, le premier élément de sortie 4 et la portion fixe 68 pour caler axialement ces dits éléments entre eux.

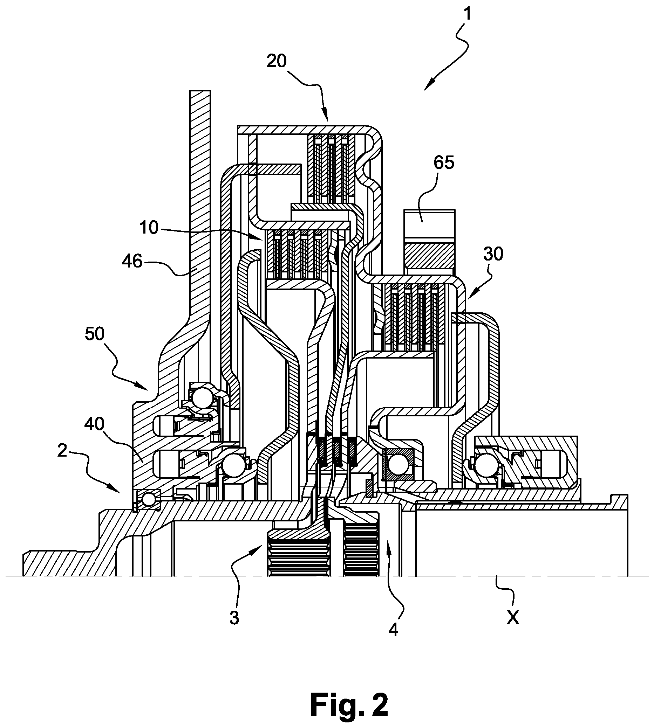

L'exemple de la figure 2 diffère de celui de la figure 1 en le positionnement du deuxième embrayage de sortie 30. Le deuxième embrayage de sortie 30 est décalé axialement du premier embrayage de sortie 20 et de l'embrayage d'entrée 10.

Dans cet exemple, le deuxième embrayage de sortie 30 est maintenant radialement plus proche de l'axe X que le premier embrayage de sortie 20.

Dans l'exemple maintenant considéré, les organes d'actionnement 40, 50 du premier embrayage de sortie 20 et de l'embrayage d'entrée 10 sont empilés radialement et leurs chambres d'actionnement sont ménagées dans la cloison transversale 46.

La zone de connexion électrique 65 et le deuxième embrayage de sortie 30 sont empilés radialement en rapprochement de l'axe X.

Selon un autre aspect de l'invention, un organe de roulement support de l'élément intermédiaire peut être disposé axialement entre l'organe d'actionnement du deuxième embrayage de sortie 30 d'une part et les éléments de sortie 4, 3 d'autre part.

## Revendications

1. Dispositif (1) de transmission de couple, notamment pour véhicule automobile, comprenant :
- un élément d'entrée de couple (2) en rotation autour d'un axe (X), apte à être couplé en rotation à un vilebrequin d'un moteur à combustion interne,
- un premier élément de sortie de couple (4), apte à être couplé en rotation à un premier arbre d'entrée d'une boîte de vitesses,
- un élément intermédiaire (5) agencé entre l'élément d'entrée de couple (2) et l'élément de sortie de couple (4), au sens de la transmission de couple,
- un embrayage d'entrée (10), accouplant sélectivement et par friction l'élément d'entrée de couple (2) et l'élément intermédiaire (5),
- un premier embrayage de sortie (20), accouplant sélectivement et par friction l'élément intermédiaire (5) et le premier élément de sortie (4),
- un organe d'actionnement (40) associé à l'embrayage d'entrée (10) et un organe d'actionnement (50) associé au premier embrayage de sortie (20), et
- un organe de roulement (47) support de l'élément d'entrée (2),
**caractérisé en ce que** le premier embrayage de sortie (20), l'embrayage d'entrée (10), l'organe d'actionnement (40) de l'embrayage d'entrée (10) et l'organe de roulement (47) se succèdent radialement et sont successivement les uns sous les autres,
**en ce qu'**il existe un plan perpendiculaire à l'axe (X) de rotation qui coupe à la fois le premier embrayage de sortie (20) et l'embrayage d'entrée (10),
et **en ce que** le dispositif comprend en outre un deuxième élément de sortie de couple (3), apte à être couplé en rotation à un deuxième arbre d'entrée d'une boîte de vitesses, un deuxième embrayage de sortie (30), accouplant sélectivement et par friction l'élément intermédiaire (5) et le deuxième élément de sortie (3) et un organe d'actionnement (60) associé au deuxième embrayage de sortie (30).

2. Dispositif (1) selon la revendication 1, le premier embrayage de sortie (20), l'embrayage d'entrée (10), l'organe d'actionnement (40) de l'embrayage d'entrée (10) et l'organe de roulement (47) étant empilés radialement en rapprochement de l'axe (X).

3. Dispositif (1) selon l'une quelconques des revendications précédentes, l'embrayage d'entrée (10) et/ou le premier embrayage de sortie (20) comprenant :
- un porte-disque d'entrée (11, 21) solidaire en rotation de l'élément d'entrée (2) pour l'embrayage d'entrée (10), et solidaire en rotation de l'élément intermédiaire (5) pour le premier embrayage de sortie (20),
- un porte-disque de sortie (12, 22) solidaire en rotation de l'élément intermédiaire (5) pour l'embrayage d'entrée (10), et solidaire en rotation du premier élément de sortie (4) pour le premier embrayage de sortie (20), et
- un ensemble multidisque (13, 23) comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, l'embrayage (10, 20) décrivant une position débrayée et une position embrayée dans laquelle lesdits plateaux et le disque de friction pincent les garnitures de friction de manière à transmettre un couple entre le porte-disque d'entrée (11, 21) et le porte-disque de sortie (12, 22).

4. Dispositif (1) selon l'une quelconques des revendications précédentes, l'élément intermédiaire (5) comprenant une zone de connexion électrique (65) apte à être lié en rotation avec une machine électrique tournante autour d'un axe parallèle à l'axe de rotation (X), la zone de connexion électrique (65) étant décalée axialement de l'embrayage d'entrée (10) et/ou du premier embrayage de sortie (20).

5. Dispositif (1) selon l'une quelconque des revendications précédentes, dans lequel les premier et deuxième embrayages de sortie (20, 30) sont empilés radialement, les organes d'actionnement (50, 60) associés aux embrayages de sortie (20, 30) étant empilés radialement.

6. Dispositif (1) selon la revendication précédente, comprenant un organe de transmission de force (41, 51, 61) pour chacun des embrayages d'entrée (10), du premier embrayage de sortie (20) et du deuxième embrayage de sortie (30), chaque organe de transmission de force étant mobile axialement pour transmettre l'effort d'actionnement depuis l'organe d'actionnement (40, 50, 60) vers l'embrayage associé, chaque organe de transmission de force (50, 60) des embrayages de sortie (20, 30) étant traversé par l'élément intermédiaire (5) pour ménager la zone de connexion (65).

7. Dispositif (1) selon l'une quelconque des revendications 1 à 4, tel que le deuxième embrayage de sortie (30) est décalé axialement du premier embrayage de sortie (20).

8. Dispositif (1) selon la revendication 7, les organes d'actionnement (40, 50) de l'embrayage d'entrée (10) et du premier embrayage de sortie (20) étant empilés radialement.

9. Dispositif (1) selon l'une quelconque des revendications 4 à 8, la zone de connexion électrique (65) et le deuxième embrayage de sortie (30) étant empilés radialement en rapprochement de l'axe (X).

10. Dispositif (1) selon l'une quelconques des revendications 5 à 9, un organe de roulement (48) support de l'élément intermédiaire (5) étant disposé axialement entre l'organe d'actionnement (60) du deuxième embrayage de sortie (30) d'une part et les éléments de sortie d'autre part (4, 3).

## Patentansprüche

1. Drehmomentübertragungsvorrichtung (1), insbesondere für ein Kraftfahrzeug, umfassend:
- ein Drehmomenteingangselement (2), das um eine Achse (X) rotiert und dazu geeignet ist, drehfest mit einer Kurbelwelle eines Verbrennungsmotors gekoppelt zu werden,
- ein erstes Drehmomentausgangselement (4), das dazu geeignet ist, drehfest mit einer ersten Eingangswelle eines Getriebes gekoppelt zu werden,
- ein Zwischenelement (5), das im Sinne der Drehmomentübertragung zwischen dem Drehmomenteingangselement (2) und dem Drehmomentausgangselement (4) angeordnet ist,
- eine Eingangskupplung (10), die das Drehmomenteingangselement (2) und das Zwischenelement (5) selektiv und durch Reibung koppelt,
- eine erste Ausgangskupplung (20), die das Zwischenelement (5) und das erste Ausgangselement (4) selektiv und durch Reibung koppelt,
- ein Betätigungsorgan (40), das der Eingangskupplung (10) zugeordnet ist, und ein Betätigungsorgan (50), das der ersten Ausgangskupplung (20) zugeordnet ist, und
- ein Wälzorgan (47) als Träger des Eingangselements (2),
**dadurch gekennzeichnet, dass** die erste Ausgangskupplung (20), die Eingangskupplung (10), das Betätigungsorgan (40) der Eingangskupplung (10) und das Wälzorgan (47) radial aufeinander folgen und jeweils untereinander angeordnet sind,
dass eine zur Rotationsachse (X) senkrechte Ebene existiert, die sowohl die erste Ausgangskupplung (20) als auch die Eingangskupplung (10) schneidet,
und dass die Vorrichtung ferner ein zweites Drehmomentausgangselement (3), das dazu geeignet ist, drehfest mit einer zweiten Eingangswelle eines Getriebes gekoppelt zu werden, eine zweite Ausgangskupplung (30), die das Zwischenelement (5) und das zweite Ausgangselement (3) selektiv und durch Reibung koppelt, sowie ein Betätigungsorgan (60), das der zweiten Ausgangskupplung (30) zugeordnet ist, umfasst.

2. Vorrichtung (1) nach Anspruch 1, wobei die erste Ausgangskupplung (20), die Eingangskupplung (10), das Betätigungsorgan (40) der Eingangskupplung (10) und das Wälzorgan (47) radial in Annäherung an die Achse (X) gestapelt sind.

3. Vorrichtung (1) nach einem der vorhergehenden Ansprüche, wobei die Eingangskupplung (10) und/oder die erste Ausgangskupplung (20) umfasst:
- einen Eingangslamellenträger (11, 21), der für die Eingangskupplung (10) drehfest mit dem Eingangselement (2) verbunden ist und für die erste Ausgangskupplung (20) drehfest mit dem Zwischenelement (5) verbunden ist,
- einen Ausgangslamellenträger (12, 22), der für die Eingangskupplung (10) drehfest mit dem Zwischenelement (5) verbunden ist und für die erste Ausgangskupplung (20) drehfest mit dem ersten Ausgangselement (4) verbunden ist, und
- ein Lamellenpaket (13, 23), das mindestens eine Reibscheibe, die drehfest mit einem der Eingangs- und Ausgangslamellenträger verbunden ist, mindestens zwei Druckplatten, die jeweils beiderseits jeder Reibscheibe angeordnet und drehfest mit dem anderen der Eingangs- und Ausgangslamellenträger verbunden sind, sowie Reibbeläge umfasst, die zwischen den Druckplatten und einer Reibscheibe angeordnet sind, wobei die Kupplung (10, 20) eine ausgerückte Stellung und eine eingerückte Stellung beschreibt, in der die genannten Druckplatten und die Reibscheibe die Reibbeläge einklemmen, um ein Drehmoment zwischen dem Eingangslamellenträger (11, 21) und dem Ausgangslamellenträger (12, 22) zu übertragen.

4. Vorrichtung (1) nach einem der vorhergehenden Ansprüche, wobei das Zwischenelement (5) einen elektrischen Verbindungsbereich (65) umfasst, der dazu geeignet ist, drehfest mit einer elektrischen Maschine verbunden zu werden, die um eine zur Rotationsachse (X) parallele Achse rotiert, wobei der elektrische Verbindungsbereich (65) axial gegenüber der Eingangskupplung (10) und/oder der ersten Ausgangskupplung (20) versetzt ist.

5. Vorrichtung (1) nach einem der vorhergehenden Ansprüche, bei der die erste und die zweite Ausgangskupplung (20, 30) radial gestapelt sind und die den Ausgangskupplungen (20, 30) zugeordneten Betätigungsorgane (50, 60) radial gestapelt sind.

6. Vorrichtung (1) nach dem vorhergehenden Anspruch, umfassend ein Kraftübertragungsorgan (41, 51, 61) für jede der Eingangskupplungen (10), der ersten Ausgangskupplung (20) und der zweiten Ausgangskupplung (30), wobei jedes Kraftübertragungsorgan axial beweglich ist, um die Betätigungskraft vom Betätigungsorgan (40, 50, 60) zur zugehörigen Kupplung zu übertragen, wobei jedes Kraftübertragungsorgan (50, 60) der Ausgangskupplungen (20, 30) vom Zwischenelement (5) durchquert wird, um den Verbindungsbereich (65) freizuhalten.

7. Vorrichtung (1) nach einem der Ansprüche 1 bis 4, bei der die zweite Ausgangskupplung (30) axial gegenüber der ersten Ausgangskupplung (20) versetzt ist.

8. Vorrichtung (1) nach Anspruch 7, wobei die Betätigungsorgane (40, 50) der Eingangskupplung (10) und der ersten Ausgangskupplung (20) radial gestapelt sind.

9. Vorrichtung (1) nach einem der Ansprüche 4 bis 8, wobei der elektrische Verbindungsbereich (65) und die zweite Ausgangskupplung (30) radial in Annäherung an die Achse (X) gestapelt sind.

10. Vorrichtung (1) nach einem der Ansprüche 5 bis 9, wobei ein Wälzorgan (48) als Träger des Zwischenelements (5) axial zwischen dem Betätigungsorgan (60) der zweiten Ausgangskupplung (30) einerseits und den Ausgangselementen (4, 3) andererseits angeordnet ist.

## Claims

1. Torque transmission device (1), notably for a motor vehicle, comprising:
- a torque input element (2) rotating about an axis (X), suitable for being rotationally coupled to a crankshaft of an internal combustion engine,
- a first torque output element (4), suitable for being rotationally coupled to a first input shaft of a gearbox,
- an intermediate element (5) arranged between the torque input element (2) and the torque output element (4), in terms of torque transmission,
- an input clutch (10), selectively and frictionally coupling the torque input element (2) and the intermediate element (5),
- a first output clutch (20), selectively and frictionally coupling the intermediate element (5) and the first output element (4),
- an actuating member (40) associated with the input clutch (10) and an actuating member (50) associated with the first output clutch (20), and
- a rolling member (47) supporting the input element (2),
**characterised in that** the first output clutch (20), the input clutch (10), the actuating member (40) of the input clutch (10) and the rolling member (47) succeed one another radially and are successively one beneath the other,
**in that** there exists a plane perpendicular to the axis (X) of rotation that intersects both the first output clutch (20) and the input clutch (10),
and **in that** the device further comprises a second torque output element (3), suitable for being rotationally coupled to a second input shaft of a gearbox, a second output clutch (30), selectively and frictionally coupling the intermediate element (5) and the second output element (3), and an actuating member (60) associated with the second output clutch (30).

2. Device (1) according to claim 1, the first output clutch (20), the input clutch (10), the actuating member (40) of the input clutch (10) and the rolling member (47) being radially stacked in proximity to the axis (X).

3. Device (1) according to any one of the preceding claims, the input clutch (10) and/or the first output clutch (20) comprising:
- an input disc carrier (11, 21) rotationally integral with the input element (2) for the input clutch (10), and rotationally integral with the intermediate element (5) for the first output clutch (20),
- an output disc carrier (12, 22) rotationally integral with the intermediate element (5) for the input clutch (10), and rotationally integral with the first output element (4) for the first output clutch (20), and
- a multi-disc assembly (13, 23) comprising at least one friction disc rotationally integral with one of the input and output disc carriers, at least two plates respectively arranged on either side of each friction disc, rotationally integral with the other of the input and output disc carriers, and friction linings arranged between the plates and a friction disc, the clutch (10, 20) describing a disengaged position and an engaged position in which said plates and the friction disc clamp the friction linings so as to transmit torque between the input disc carrier (11, 21) and the output disc carrier (12, 22).

4. Device (1) according to any one of the preceding claims, the intermediate element (5) comprising an electrical connection zone (65) suitable for being rotationally linked to a rotary electric machine rotating about an axis parallel to the axis of rotation (X), the electrical connection zone (65) being axially offset from the input clutch (10) and/or the first output clutch (20).

5. Device (1) according to any one of the preceding claims, wherein the first and second output clutches (20, 30) are radially stacked, the actuating members (50, 60) associated with the output clutches (20, 30) being radially stacked.

6. Device (1) according to the preceding claim, comprising a force transmission member (41, 51, 61) for each of the input clutch (10), the first output clutch (20) and the second output clutch (30), each force transmission member being axially movable to transmit the actuating force from the actuating member (40, 50, 60) to the associated clutch, each force transmission member (50, 60) of the output clutches (20, 30) being passed through by the intermediate element (5) to provide the connection zone (65).

7. Device (1) according to any one of claims 1 to 4, such that the second output clutch (30) is axially offset from the first output clutch (20).

8. Device (1) according to claim 7, the actuating members (40, 50) of the input clutch (10) and the first output clutch (20) being radially stacked.

9. Device (1) according to any one of claims 4 to 8, the electrical connection zone (65) and the second output clutch (30) being radially stacked in proximity to the axis (X).

10. Device (1) according to any one of claims 5 to 9, a rolling member (48) supporting the intermediate element (5) being arranged axially between the actuating member (60) of the second output clutch (30) on the one hand and the output elements (4, 3) on the other hand.
